# EUROPÄISCHE PATENTSCHRIFT

(11) **EP 1 007 359 B1**
(45) Veröffentlichungstag und Bekanntmachung des Hinweises auf die Patenterteilung: **07.11.2001**
(21) Anmeldenummer: 98948784.8
(22) Anmeldetag: 13.08.1998
(51) Int. Cl.: B41F 1/00

(54) **KURBELTRIEB**
CRANK MECHANISM
MECANISME A MANIVELLE

(30) Priorität: 20.08.1997 DE 19736118
(43) Veröffentlichungstag der Anmeldung: 14.06.2000
(73) Patentinhaber: Koenig & Bauer Aktiengesellschaft, 97080 Würzburg (DE)
(72) Erfinder: WIELAND, Rainer, D-97082 Würzburg (DE)
(86) Internationale Anmeldenummer: DE9802331
(87) Internationale Veröffentlichungsnummer: WO9908873

(56) Entgegenhaltungen:
- EP-A- 0 189 827
- US-A- 3 742 850

## Beschreibung

Die Erfindung betrifft einen Kurbeltrieb mit einer längenveränderbaren Kurbel gemäß dem Oberbegriff des Anspruches 1.

Die DE-OS 17 61 389 zeigt eine Vorrichtung zum Verstellen eines Reibzylinderhubes in einem Farbwerk einer Rotationsdruckmaschine. Dabei besteht eine Kurbel des Kurbeltriebes im wesentlichen aus einem exzentrischen Zapfen und einer darauf gelagerten Exzenterbuchse. Die Exzenterbuchse ist relativ zum Zapfen mittels eines Planetenradgetriebes schwenkbar.

Die DE 27 10 135 B2 beschreibt eine Vorrichtung zur Einstellung des Verreibeinsatzwinkels. Dabei wird eine Phasenlage zwischen einer Antriebswelle mit einer wendelförmigen Nut und einer Antriebswelle mittels einer Schiebehülse eingestellt.

Die DE-PS 687 918 offenbart ein Getriebe zur Umwandlung einer hin- und hergehenden Bewegung in eine Drehbewegung.

Die DE-AS 11 51 238 zeigt eine Vorschubfeineinstellvorrichtung. Dabei erfolgt eine Längenveränderung der Kurbel direkt über zwei unverdrehbare Stifte, die sich auf einer schrägverlaufenden, axial verschiebbaren Steuerfläche abstützen.
Weder Stifte noch Steuerflächen sind in Umfangsrichtung zueinander verstellbar.
Hierbei ist eine Verstellung mittels relativ zueinander schwenkbarer Exzenterbuchsen und Zapfen nicht vorgesehen.

Die EP 04 80 879 A1 offenbart eine Vorrichtung zum stufenlosen Verstellen der axialen Verreibungsbewegung von Reibwalzen. Dabei wird mittels eines axial verschiebbaren Zahnrades ein Exzenterbolzen verstellt.

Der Erfindung liegt die Aufgabe zugrunde, einen Kurbeltrieb mit längenveränderbarer Kurbel zu schaffen.

Diese Aufgabe wird erfindungsgemäß durch die Merkmale des Anspruches 1 gelöst.

Die mit der Erfindung erzielbaren Vorteile bestehen insbesondere darin, daß durch die Anordnung von einem axial verschiebbaren Antriebsmittel, z. B. einem Stift, mit dem ein schwenkbares Abtriebsmittel, z. B. eine wendelförmige Nut, zusammenwirkt, ein Kurbeltrieb mit wenigen und einfach herzustellenden Bauteilen geschaffen wird. Eine wirksame Länge der Kurbel des Kurbeltriebes ist dabei leicht veränderbar.

Ein Ausführungsbeispiel der Erfindung ist in der Zeichnung dargestellt und wird im folgenden näher beschrieben.

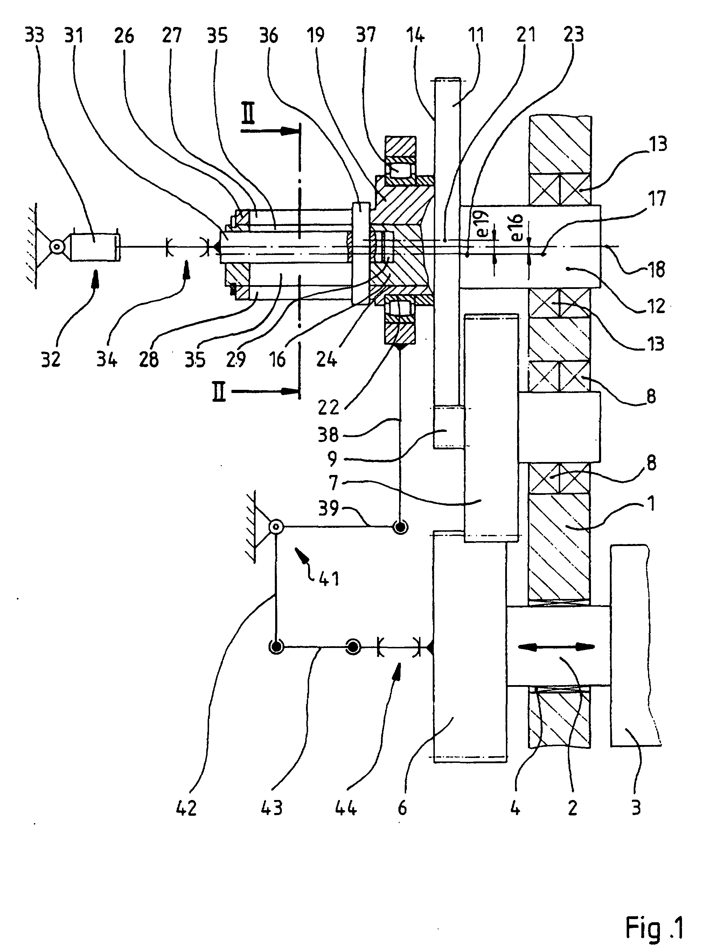

Es zeigen
- Fig. 1: eine schematische Darstellung eines Kurbeltriebes in einem ersten Ausführungsbeispiel;

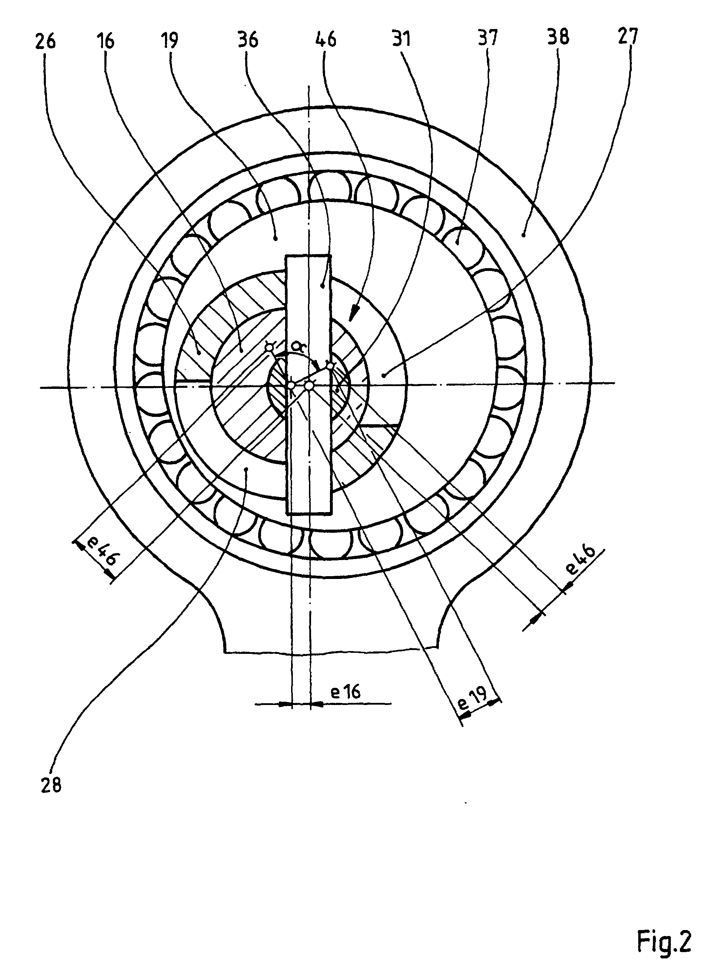

- Fig. 2: einen schematischen Schnitt durch eine Kurbel des Kurbeltriebes gemäß Fig. 1.

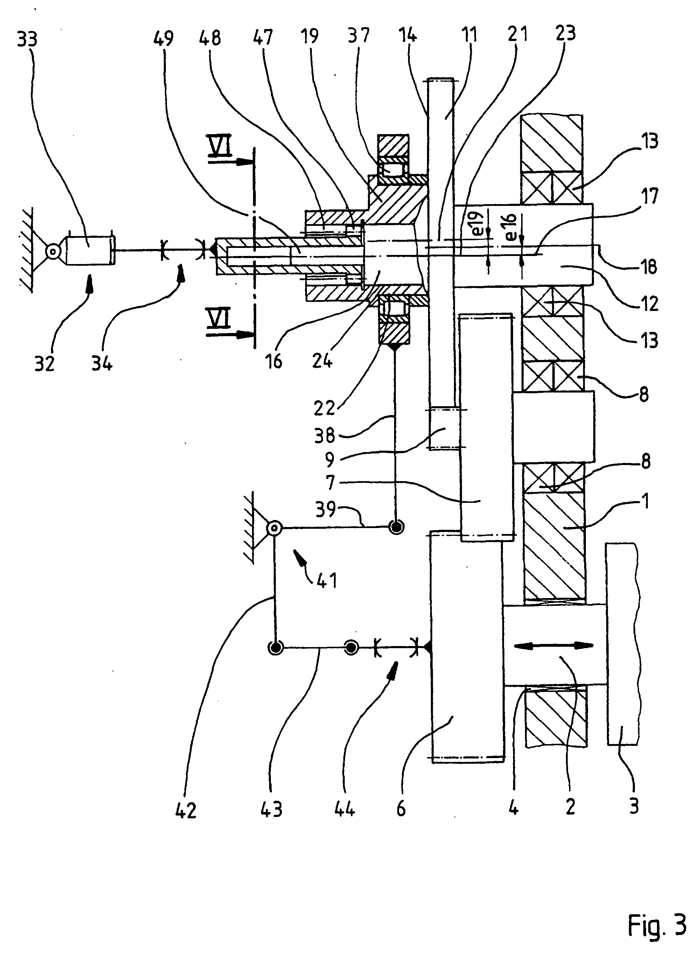

- Fig. 3: eine schematische Darstellung eines Kurbeltriebes in einem zweiten Ausführungsbeispiel;

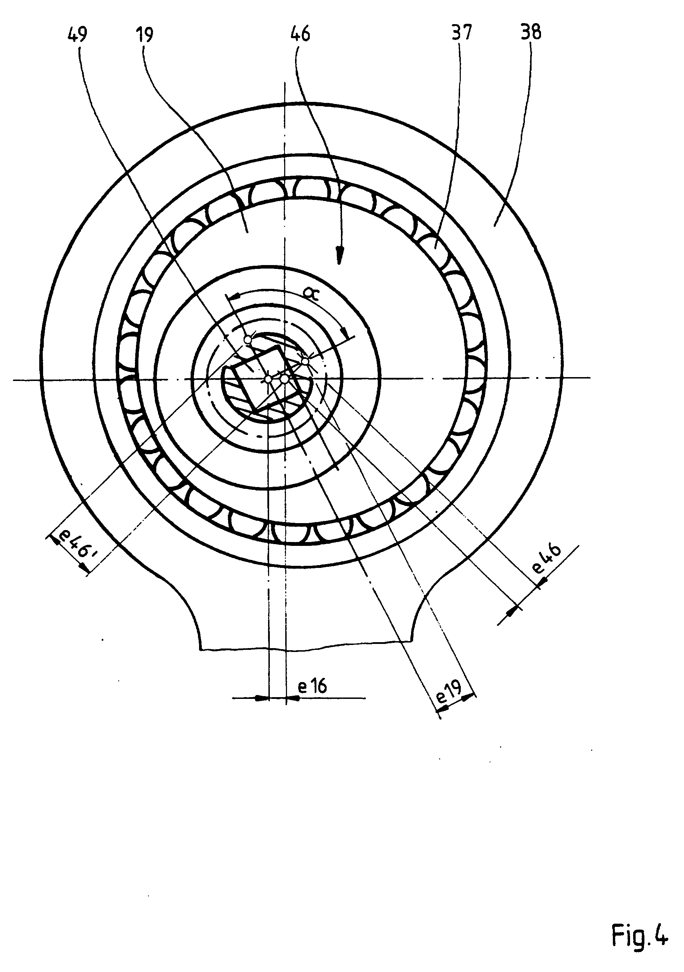

- Fig. 4: einen schematischen Schnitt durch eine Kurbel des Kurbeltriebes gemäß Fig. 3.

Ein Kurbeltrieb zur Umwandlung einer Drehbewegung in eine Linearbewegung wird beispielsweise in einer Rotationsdruckmaschine zum Antrieb oszillierender Reibzylinder oder Rakeleinrichtungen verwendet. Im folgenden Ausführungsbeispiel wird der Kurbeltrieb zur Erzeugung eines Hubes in axialer Richtung eines Reibzylinders für ein Farbwerk oder Feuchtwerk einer Rotationsdruckmaschine verwendet. Die Größe des Hubes des Reibzylinders 2 ist während des Maschinenlaufes veränderbar.

In einem Seitengestell 1 einer Rotationsdruckmaschine ist ein Zapfen 2 eines Reibzylinders 3 mittels Wälzlager 4 drehbar und in axialer Richtung bewegbar gelagert. An diesem Zapfen 2 ist ein Zahnrad 6 drehsteif befestigt. Dieses Zahnrad 6 greift in ein erstes Zwischenzahnrad 7 ein, das im Seitengestell 1 mittels Wälzlager 8 drehbar gelagert ist. Mit diesem ersten Zwischenrad 7 ist ein zweites Zwischenrad 9 fest verbunden. In dieses zweite Zwischenrad 9 greift ein Zahnrad 11 ein, das mittels eines Zapfens 12 und Wälzlager 13 im Seitengestell drehbar, in axialer Richtung des Zapfens 12 fest gelagert ist.
An einer vom Seitengestell 1 wegweisenden Stirnseite 14 des Zahnrades 11, ist ein Zapfen 16 exzentrisch angeordnet. Eine Mittelachse 17 des Zapfens 16 ist um eine Exzentrizität e16 exzentrisch zu einer Drehachse 18 des Zahnrades 11 bzw. des Zapfens 12 angeordnet. Auf diesem Zapfen 16 ist eine Exzenterbuchse 19 schwenkbar gelagert. Eine Mittelachse 21 einer Mantelfläche 22 ist zu einer Mittelachse 23 einer Bohrung 24 dieser Exzenterbuchse 19 um eine Exzentrizität e19 versetzt. Die Mittelachse 23 der Bohrung 24 der Exzenterbuchse 19 liegt auf der Mittelachse 17 des Zapfens 16.
Die Exzenterbuchse 19 ist an ihrer vom Seitengestell 1 wegweisenden Stirnseite mit einer zentrisch zum Zapfen 16 verlaufenden Hülse 26 versehen. Diese Hülse 26 weist zwei um 180° zueinander versetzte, wendelartig verlaufenden Nuten 27; 28 auf.
In dem Zapfen 16 ist eine axial verlaufende Bohrung 29 angeordnet, die konzentrisch zur Drehachse 18 des Zahnrades 11 verläuft. In dieser Bohrung 29 ist ein Bolzen 31 bezüglich seiner Längsachse axial bewegbar gelagert. Zur Bewegung in axialer Richtung ist dieser Bolzen 31 mit einer Stelleinrichtung 32 verbunden. Im vorliegenden Beispiel besteht die Stelleinrichtung 32 im wesentlichen aus einem gestellfest angeordneten Arbeitszylinder 33, dessen Kolben mittels einer Kupplung 34 mit dem Bolzen 31 verbunden ist. Diese Kupplung 34 ist in axialer Richtung steif und in Umfangsrichtung sind deren zwei Kupplungshälften zueinander drehbar. Die Stelleinrichtung 32 kann beispielsweise auch als Positionierantrieb ausgeführt sein, so daß der Bolzen 31 wahlweise z. B. mittels eines Elektromotors in eine Vielzahl von Positionen positionierbar ist.
In dem Bolzen 31 ist in radialer Richtung ein Stift 36 beidseitig über den Bolzen 31 überstehend und in die beiden Nuten 27; 28 eingreifend befestigt. Der Zapfen 16 weist zwei parallel zu dem Bolzen 31 verlaufende Nuten 35 auf, die als Verdrehsicherung zwischen Zapfen 16 und Stift 36 dienen. Nuten 27; 28 und Stift 36 sind aufeinander angepaßt, so daß der Stift 36 in axialer Richtung entlang der Nuten 27; 28 bewegbar, in Umfangsrichtung spielarm angeordnet ist.

Auf der Mantelfläche der Exzenterbuchse 19 ist ein Pendelrollenlager 37 befestigt. Dieses Pendelrollenlager 37 ist in einer Koppel 38 angeordnet, die die Drehbewegung der als Kurbel wirkenden Exzenterbuchse 19 in eine oszillierende Linearbewegung überträgt.
Ein freies Ende der Koppel 38 ist mit einem ersten Hebelarm 39 eines zweiarmigen Hebels 41 gelenkig verbunden. Dieser Hebel 41 ist bezüglich des Seitengestells 1 schwenkbar gelagert. Ein zweiter Hebelarm 42 dieses Hebels 41 ist mit einem ersten Ende einer zweiten Koppel 43 gelenkig verbunden. Mittels einer zweiten Kupplung 44 ist ein zweites Ende dieser zweiten Koppel 43 mit dem Zapfen 2 des Reibzylinders verbunden. Diese Kupplung 44 ist in axialer Richtung steif und deren Kupplungshälften sind in Umfangsrichtung drehbar.

Die als Kurbel wirkende Exzenterbuchse 19 treibt die erste Koppel 38 an, so daß die Drehbewegung des Zapfens 12 über die als Koppel wirkende Zapfen 16 und Exzenterbuchse 19 in eine oszillierende Linearbewegung der Koppel 38 umgesetzt wird. Mittels des Hebels 41, der Koppel 43 und der Kupplung 44 wird diese oszillierende Bewegung auf den Reibzylinder 3 übertragen, so daß der Reibzylinder 3 eine oszillierende Bewegung in axialer Richtung ausführt.

In einer ersten Stellung der Exzenterbuchse 19 bezüglich des exzentrisch angeordneten Zapfen 16 überlagern sich deren Exzentrizitäten e16 und e23 zu einer ersten wirksamen Exzentrizität e46 der von Exzenterbuchse 19 und Zapfen 16 gebildeten Kurbel 46.
Zur Verstellung des Hubes des Reibzylinders 2 wird der Arbeitszylinder 33 betätigt und der Bolzen 31 axial von einer ersten in eine zweite Position bewegt. Dabei gleitet der Stift 36 entlang der Nuten 27; 28 in axialer Richtung und dreht die Hülse 26 bzw. die Exzenterbuchse 19 entsprechend einer Steigung der Nuten 27; 28 um einen Winkel Alpha, z. B. Alpha = 90°, in Umfangsrichtung. Die Lage der Exzentrizität e19, z. B. e19 = 11,5 mm, der Exzenterbuchse 19 bezüglich der Exzentrizität e16, z. B. e16 = 5,4 mm des Zapfens 16 wird somit verändert. Es ergibt sich daraus eine zweite wirksame Exzentrizität e46' der Kurbel 46. Entsprechend einem Verhältnis von erster wirksamer Exzentrizität e46, z. B. e46 = 7,5 mm, und zweiter wirksamer Exzentrizität e46', z. B. e46' = 15 mm wird der Hub h, z. B. h = 15 mm auf h' = 30 mm vergrößert.
Die Exzentrizität e46 bzw. e46' entspricht einer Länge der Kurbel 46, d.h. die wirksame Länge der Kurbel 46 ist also veränderbar.

Wird anstelle des Arbeitszylinders 33 ein Positionierantrieb verwendet, ist eine stufenlose Hubverstellung des Reibzylinders 3 auch während des Laufes der Rotationsdruckmaschine möglich.

In einem zweiten Ausführungsbeispiel ist als Antriebsmittel ein Zahnrad 47 mit einer schrägverzahnten Außenverzahnung und als Abtriebsmittel ein Zahnrad 48 mit einer schrägverzahnten Innenverzahnung vorgesehen. Das außenverzahnte Zahnrad 47 ist mittels eines Vierkantbolzens verdrehgesichert auf dem Zapfen 16 gelagert und mittels des Arbeitszylinders 33 axial bewegbar. Dieses außenverzahnte Zahnrad 47 greift in das innenverzahnte Zahnrad 48 ein, welches an der Exzenterbuchse 19 angeordnet ist.
Wird das außenverzahnte Zahnrad 47 axial verschoben, wird das innenverzahnte Zahnrad 48 gedreht, d.h. die Lage der Exzenterbuchse 19 zum Zapfen 16 wird verändert.

Bei dem Kurbeltrieb sind exzentrischer Zapfen 16 und Exzenterbuchse zueinander schwenkbar. Zur Verstellung von Zapfen 16 und Exzenterbuchse 19 ist ein in axialer Richtung der Drehachse 18 des Kurbeltriebes bewegbares und in Umfangsrichtung relativ zu der Drehachse 18 des Kurbeltriebes festes Antriebsmittel 36; 47 angeordnet. Dieses Antriebsmittel 36; 47 ist mit einem in axialer Richtung der Drehachse 18 des Kurbeltriebes festen und relativ zur Umfangsrichtung der Drehachse 18 des Kurbeltriebes schwenkbaren Abtriebsmittel 27; 28; 48 zusammenwirkend angeordnet.
Die Exzenter e16; e19 des Zapfens 16 und der Exzenterbuchse 19 werden zueinander eingestellt, indem das Antriebsmittel 36; 47 in axialer Richtung bewegt wird. Durch diese axiale Bewegung des Antriebsmittel 36; 47 wird das Abtriebsmittel 27; 28; 48 und damit die Exzenterbuchse 19 geschwenkt. Dadurch wird die Größe des wirksamen Exzenters e46 der Kurbel 46 verändert.

Es ist auch möglich, die wendelartigen Nuten 27; 28 in den Bolzen 31 und den Stift 36 in der Exzenterbuchse 19 anzuordnen. Die Verdrehsicherung des Bolzens 31 darf dann nicht gemäß dem ersten Ausführungsbeispiel mittels des Stiftes 36 erfolgen, sondern beispielsweise mittels des Vierkantbolzens 49 des zweiten Ausführungsbeispiels.

### Bezugszeichenliste

- 1: Seitengestell
- 2: Zapfen
- 3: Reibzylinder
- 4: Wälzlager
- 5: -
- 6: Zahnrad
- 7: Zwischenzahnrad
- 8: Wälzlager
- 9: Zwischenrad
- 10: -
- 11: Zahnrad
- 12: Zapfen
- 13: Wälzlager
- 14: Stirnseite
- 15: -
- 16: Zapfen
- 17: Mittelachse (16)
- 18: Drehachse (11)
- 19: Exzenterbuchse
- 20: -
- 21: Mittelachse (19)
- 22: Mantelfläche (19)
- 23: Mittelachse (24)
- 24: Bohrung (19)
- 25: -
- 26: Hülse
- 27: Nut (26)
- 28: Nut (26)
- 29: Bohrung (16)
- 30: -
- 31: Bolzen
- 32: Stelleinrichtung
- 33: Arbeitszylinder
- 34: Kupplung
- 35: Nut (16)
- 36: Stift
- 37: Pendelrollenlager
- 38: Koppel
- 39: Hebelarm, erster (41)
- 40: -
- 41: Hebel
- 42: Hebelarm, zweiter (41)
- 43: Koppel
- 44: Kupplung
- 45: -
- 46: Kurbel
- 47: Zahnrad (außenverzahnt)
- 48: Zahnrad (innenverzahnt)
- 49: Vierkantbolzen

- e16: Exzentrizität
- e19: Exzentrizität
- e46: Exzentrizität
- e46': Exzentrizität

## Patentansprüche

1. Kurbeltrieb, wobei ein exzentrischer Zapfen (16) und eine Exzenterbuchse (19) im wesentlichen die Kurbel (46) bildend angeordnet sind und Zapfen (16) und Exzenterbuchse (19) relativ zueinander schwenkbar sind, so daß deren Exzenter (e16; e19) zueinander einstellbar sind, wobei ein in axialer Richtung einer Drehachse (18) des Kurbeltriebes bewegbares und in Umfangsrichtung relativ zu der Drehachse (18) des Kurbeltriebes festes Antriebsmittel (36) angeordnet ist und dieses Antriebsmittel (36; 47) mit einem in axialer Richtung der Drehachse (18) des Kurbeltriebes festen und relativ zur Umfangsrichtung der Drehachse (18) des Kurbeltriebes schwenkbaren Abtriebsmittel (27; 28) zusammenwirkend angeordnet ist und wobei das Antriebsmittel (36; 47) mit dem Zapfen (16) bzw. der Exzenterbuchse (19) und das Abtriebsmittel (27; 28) mit der Exzenterbuchse (19) bzw. mit dem Zapfen (16) zusammenwirkend angeordnet ist, **dadurch gekennzeichnet, daß** das Antriebsmittel (36) auf dem Zapfen (16) gelagert ist.

2. Kurbeltrieb nach Anspruch 1, **dadurch gekennzeichnet, daß** das Antriebsmittel (36) als ein relativ zum Zapfen (16) axial bewegbarer, unverdrehbarer Stift (36) ausgebildet ist, daß das Abtriebsmittel (27; 28) als wendelförmige Nut (27; 28) in der auf dem Zapfen (16) gelagerten Exzenterbuchse (19) ausgebildet ist und daß Stift (36) und Nut (27; 28) zusammenwirkend angeordnet sind.

3. Kurbeltrieb nach Anspruch 1, **dadurch gekennzeichnet, daß** der Kurbeltrieb mit einem Reibzylinder (3) einer Rotationsdruckmaschine zusammenwirkend angeordnet ist.

## Claims

1. Crank mechanism, an eccentric pin (16) and an eccentric bush (19) essentially being arranged to form the crank (46), and pin (16) and eccentric bush (19) being capable of swivelling in relation to one another, so that their eccentricities (e16; e19) are adjustable relative to one another, a drive means (36) being moveable in the axial direction of an axis of rotation (18) of the crank mechanism and fixed in the circumferential direction relative to the axis of rotation (18) of the crank mechanism, and the said drive means (36; 47) being arranged to interact with an output means (27; 28), fixed in the axial direction of the axis of rotation (18) of the crank mechanism and capable of swivelling in relation to the circumferential direction of the axis of rotation (18) of the crank mechanism, and the drive means (36; 47) being arranged to interact with the pin (16) and the eccentric bush (19), and the output means (27; 28) being arranged to interact with the eccentric bush (19) and with the pin (16), **characterized in that** the drive means (36) is supported on the pin (16).

2. Crank mechanism according to Claim 1, **characterized in that** the drive means (36) is designed as a torsionally fixed stud (36), axially moveable in relation to the pin (16), **in that** the output means (27; 28) is designed as helical groove (27; 28) in the eccentric bush (19) supported on the pin (16), and that stud (36) and groove (27; 28) are arranged to interact.

3. Crank mechanism according to Claim 1, **characterized in that** the crank mechanism is arranged to interact with a distributing roller (3) of a rotary printing machine.

## Revendications

1. Mécanisme à manivelle, un tourillon excentrique (16) et une douille excentrique (19) étant disposés en formant pour l'essentiel la manivelle (46) et le tourillon (16) et la douille d'excentrique (19) étant susceptibles de pivoter l'un par rapport à l'autre, de sorte que leurs excentriques (e16 ; e19) soient réglables l'un par rapport à l'autre, un moyen menant (36), déplaçable dans la direction axiale d'un axe de rotation (18) du mécanisme à manivelle et fixe dans la direction périphérique par rapport à l'axe de rotation (18) du mécanisme à manivelle, étant disposé et ce moyen menant (36 ; 47) étant disposé de façon à coopérer avec un moyen mené (27 ; 28) fixe dans la direction axiale de l'axe de rotation (18) du mécanisme à manivelle et susceptible de pivoter par rapport à la direction périphérique de l'axe de rotation (18) du mécanisme à manivelle, et le moyen menant (36 ; 47) étant disposé de façon à coopérer avec le tourillon (16) ou la douille d'excentrique (19) et le moyen mené (27 ; 28) étant disposée à coopérer avec la douille d'excentrique (19) ou avec le tourillon (16), **caractérisé en ce que** le moyen menant (36) est monté à rotation sur le tourillon (16).

2. Mécanisme à manivelle selon la revendication 1, **caractérisé en ce que** le moyen menant (36) est réalisé sous la forme d'une tige (36) immobile en rotation, déplaçable axialement par rapport au tourillon (16), **en ce que** le moyen mené (27 ; 28) est réalisé sous la forme de gorges (27 ; 28) en forme d'enroulement dans la douille d'excentrique (19) montée à rotation sur le tourillon (16) et **en ce que** la tige (36) et la gorge (27 ; 28) sont disposées de façon à coopérer.

3. Mécanisme à manivelle selon la revendication 1, **caractérisé en ce que** le mécanisme à manivelle est disposé de façon à coopérer avec un cylindre de frottement (3) d'une machine à imprimer rotative.
